Europäisches Patentamt

European Patent Office

Office européen des brevets

(11) Numéro de publication: **0 045 685**
A1

# (12) DEMANDE DE BREVET EUROPEEN

(21) Numéro de dépôt: **81401194.6**

(22) Date de dépôt: **24.07.81**

(51) Int. Cl.³: **B 60 P 3/10**
B 63 C 13/00, B 63 B 35/72
B 62 B 1/26

(30) Priorité: **30.07.80 FR 8016787**

(43) Date de publication de la demande:
**10.02.82 Bulletin 82/6**

(84) Etats contractants désignés:
**DE IT NL**

(71) Demandeur: **Vernier, Alain**
**5 square de la Tour Maubourg**
**F-75007 Paris(FR)**

(72) Inventeur: **Vernier, Alain**
**5 square de la Tour Maubourg**
**F-75007 Paris(FR)** .

(74) Mandataire: **Bloch, Robert et al,**
**39 avenue de Friedland**
**F-75008 Paris(FR)**

(54) Chariot pour déplacer une charge allongée à l'aide d'un élément à deux armatures non parallèles, notamment pour planche à voile.

(57) Chariot pour déplacer une planche à voile à l'aide du wishbone (20) associé, aux armatures (21, 22) non parallèles, caractérisé par le fait qu'il comporte un support (1) solidaire de deux roues (5) et, solidaires du support (1), des moyens (10, 11) agencés pour coopérer avec les deux surfaces extérieures des armatures (21, 22) et des moyens (16, 17) agencés pour coopérer avec les deux surfaces intérieures des armatures (21, 22). On se sert du wish-bone (20) comme timon du chariot.

FIG_1

EP 0 045 685 A1

Croydon Printing Company Ltd.

Chariot pour déplacer une charge allongée à l'aide d'un élément à deux armatures non parallèles, notamment pour planche à voile.

La présente invention concerne un chariot pour déplacer une charge allongée, notamment une planche à voile.

Il existe déjà différents types de chariot pour planche à voile. Tous ont été conçus pour la manutention directe, ou indirecte, c'est-à-dire à l'aide d'un timon, de la planche elle-même qui, certes, par son poids, reste l'élément essentiel à déplacer. Mais aucun, jusqu'ici, n'a pris en compte un élément du gréement de la planche, qui est la lunette ou l'arceau, communément appelée "wish-bone". Si bien que la planche ayant été rendue solidaire de l'un de ces chariots, et le problème posé jusqu'alors ainsi résolu, on reste embarrassé par ce wish-bone qu'il faut, soit poser sur la planche, soit tenir de l'une des deux mains libres, soit même encore confier à une autre personne.

La présente invention vise à utiliser le wish-bone d'une planche à voile pour déplacer cette planche, et cette invention repose d'ailleurs sur la constatation qu'un wish-bone est un élément à deux armatures non parallèles.

A cet effet, la présente invention concerne un chariot pour déplacer une charge allongée, notamment une planche à voile à laquelle est associée une lunette, à l'aide d'un élément à à deux armatures non parallèles, notamment de la lunette de la planche, caractérisé par le fait que le chariot comporte un support solidaire d'au moins un essieu de roue et, solidaires du support, des premiers moyens agencés pour coopérer respectivement avec les deux surfaces extérieures des deux armatures et des seconds moyens agencés pour coopérer respectivement avec les deux surfaces intérieures des deux armatures.

Grâce aux deux moyens agencés pour coopérer respectivement avec les surfaces extérieures et intérieures des armatures du wish-bone, celui-ci peut être fixé sur le support. Après la fixation du wish-bone de la planche sur le support, ou châssis, du chariot, il suffit de poser la planche sur au moins une partie de son wish-bone pour pouvoir la déplacer en se servant du wish-bone comme timon du chariot de l'invention. Non seulement on évite d'être encombré par le wish-bone, mais encore celui-ci devient un des éléments de manutention de la planche.

Dans une forme de réalisation préférée du chariot de l'invention, les moyens agencés pour coopérer avec les armatures du wish-bone comprennent une paire d'étriers mobile en translation perpendiculairement à l'essieu de roue.

Dans ce cas, il est avantageux que les étriers de cette paire mobile, pouvant par conséquent être éloignés du support, soient ouverts vers l'extérieur, pour coopérer avec les surfaces intérieures des armatures du wish-bone.

Dans une autre forme de réalisation de l'invention, il est toujours prévu une paire d'étriers ouverts vers l'extérieur, mais ces étriers sont montés mobiles en translation parallèlement à l'essieu de roue. Dans ce cas, d'ailleurs, cette paire d'étriers peut également être montée mobile en translation perpendiculairement à l'essieu de roue.

Les moyens de coopération avec les armatures du wish-bone peuvent comporter une deuxième paire d'étriers, montés directement sur le support, fixes ou mobiles en translation parallèlement à l'essieu de roue, et ouverts respectivement dans les directions opposées à celles des étriers de la première paire d'étriers, en l'occurrence vers l'intérieur. Cette paire d'étriers peut être remplacée par une paire de poulies à gorge destinées à recevoir les armatures du wish-bone.

Dans tous les cas, le chariot de l'invention comporte donc des organes ouverts respectivement vers l'intérieur et vers l'extérieur, fixes ou mobiles en translation, pour permettre la fixation au support de n'importe quel wish-bone de planche à voile, indépendamment de la section de ses armatures ou de sa forme d'ensemble. On pourrait même concevoir des éléments fixes en position, mais à branche pivotante, par exemple dans le cas où le chariot de l'invention comporterait quatre étriers ainsi structurés et fixés directement sur le support du chariot de l'invention.

L'invention sera mieux comprise à l'aide de la description suivante de deux formes de réalisation du chariot de l'invention, en référence au dessin annexé, sur lequel :

– la figure 1 représente une vue en perspective d'une première forme de réalisation du chariot de l'invention, un arceau, ou wish-bone, fixé au chariot ;

– la figure 2 représente une vue en perspective du support du chariot de la figure 1, pendant la mise en place du wish-bone, et

– la figure 3 représente une vue en perspective d'une deuxième forme de réalisation du chariot de l'invention, un wish-bone fixé au chariot.

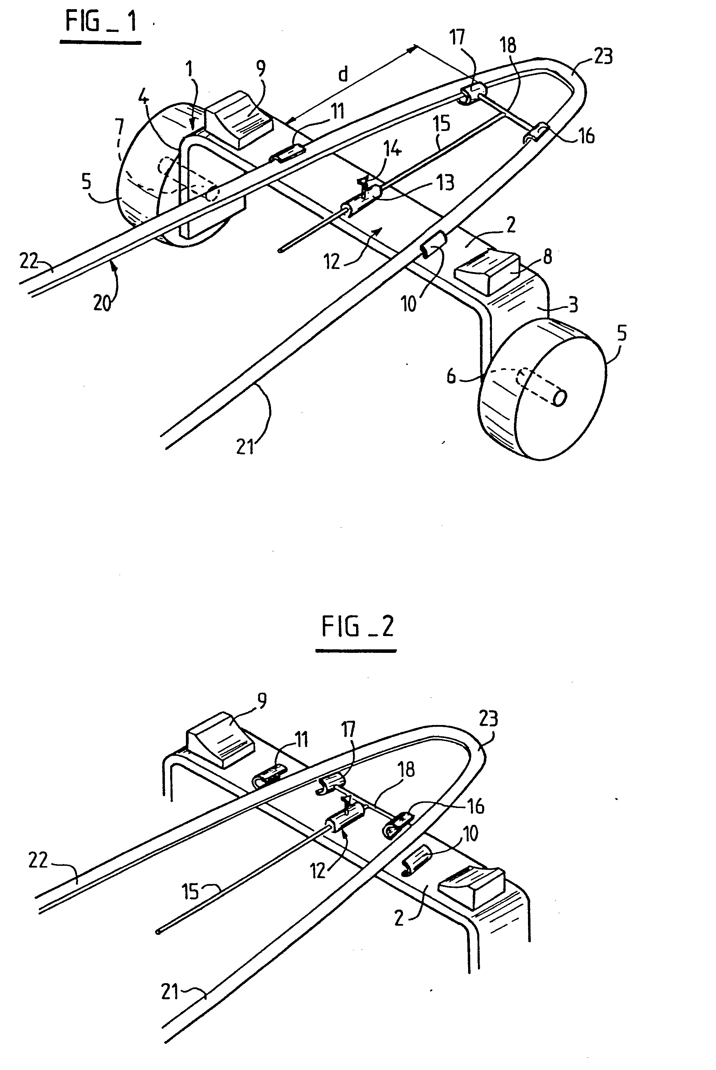

En référence aux figures 1 et 2, le chariot de l'invention comporte un support, ou châssis, 1 formé d'une traverse horizontale 2 prolongée par deux montants latéraux verticaux 3 et 4 respectivement solidaires de deux roues 5 montées rotatives autour de deux essieux 6 et 7 parallèles à la traverse 2.

La traverse 2 a une certaine largeur, dans le sens de déplacement du chariot, et comporte, à sa surface supérieure, deux cales d'appui 8 et 9, dont il sera question plus loin, deux étriers 10 et 11, disposés entre les deux cales 8 et 9 et symétriquement par rapport au plan médian du chariot, non représenté, et sensiblement dans ce plan médian, un organe de réglage ou d'adaptation 12.

Chaque étrier 10, 11 est formé d'une branche sensiblement demi-circulaire ouverte vers l'intérieur du chariot.

Chaque cale d'appui 8, 9 comporte une surface conformée pour recevoir, de préférence par ses bords latéraux, une planche à voile, dont le wish-bone associé, par les surfaces extérieures de ses deux armatures, est destiné à être reçu, ou encastré, dans les étriers 10 et 11. Les surfaces d'appui des cales 8 et 9 sont, de préférence, surélevées par rapport à la surface supérieure de la traverse 2 d'une hauteur au moins égale à celle de l'organe 12.

L'organe de réglage 12 est constitué d'un manchon 13 et d'un boulon de verrouillage 14 coopérant avec un taraudage ménagé dans le manchon 13. Une barre de réglage 15, pouvant être fixée en translation par le boulon 14, est montée coulissante dans le manchon 13, donc perpendiculairement aux essieux 6 et 7, et porte à l'une de ses extrémités, dite extrémité "extérieure", une tige 18 parallèle aux essieux 6 et 7 et portant, à ses deux extrémités et à égale distance de la barre 15, deux étriers "extérieurs" 16, 17.

Chaque étrier 16, 17 est formé d'une branche sensiblement demi-circulaire ouverte vers l'extérieur du chariot.

L'écartement des étriers extérieurs 16, 17 est inférieur à l'écartement des étriers intérieurs 10, 11. Il doit permettre la pose du wish-bone sur le support 2, entre les étriers intérieurs 10, 11, les étriers extérieurs 16, 17 restant, quant à eux, dans le volume ménagé entre les deux armatures. Le chariot ci-dessus est utilisé de la façon suivante.

On pose le wish-bone 20 de la planche à déplacer, sur la surface supérieure de la traverse 2, de manière que ses deux armatures 21 et 22 non parallèles viennent se placer entre les étriers intérieurs 10, 11 et l'organe de réglage 12. De la sorte, l'une des extrémités 23 du wish-bone, au niveau de laquelle sont réunies les deux armatures 21 et 22, n'est pas très éloignée du chariot. On fait ensuite glisser les armatures 21 et 22 sur le support 1, jusqu'à ce qu'elles viennent en butée, par leur surface extérieure, contre les étriers intérieurs 10 et 11. A cet égard, il peut être avantageux d'incliner légèrement les étriers intérieurs 10, 11 par rapport au plan médian du chariot, pour qu'ils épousent mieux la surface des armatures et que la coopération entre eux et les armatures soit meilleure. On notera d'ailleurs que la coopération des étriers intérieurs avec les armatures respectives du wish-bone s'effectue non seulement par leur surface verticale intérieure, mais également par leurs surfaces horizontales supérieure et inférieure.

Lorsque le wish-bone est bloqué, en translation vers l'avant, contre les étriers intérieurs 10, 11, on fait coulisser vers l'avant la barre 15, jusqu'à ce que les étriers extérieurs 16, 17 viennent, après avoir progressivement enveloppé les armatures 21 et 22, en butée contre elles. Alors, le wish-bone est également bloqué en translation longitudinale vers l'arrière. Il est bien évident qu'il est, dans ce cas, aussi bloqué en translation latérale. La coopération entre les étriers extérieurs et les armatures du wish-bone s'effectue de la même manière qu'avec les étriers intérieurs. On verrouille ensuite la barre de réglage 15 par le boulon 14, ce qui finit de rendre solidaire le wish-bone 20 du chariot.

Le wish-bone peut ensuite être utilisé comme timon de traction, ou de poussée, du chariot par son autre extrémité, non représentée, opposée à l'extrémité 23.

Il suffit ensuite de poser sur le wish-bone la planche, qui prend appui en partie sur les cales 8 et 9 du support 1 et de préférence en partie sur presque toute la longueur des armatures 21 et 22, pour pouvoir la déplacer.

L'association du wish-bone et du chariot décrit ci-dessus s'effectue rapidement et sans outil.

On conçoit aisément que le chariot 1 est adapté pour déplacer n'importe quelle planche à voile, dès lors que son wish-bone possède des armatures dont la section est inférieure à celle des étriers et dont le galbe est tel que dans un plan transversal, elles sont écartées de la même distance que les étriers intérieurs et, dans un autre plan transversal, plus proche de l'extrémité du wish-bone, elles sont écartées de la même distance que les étriers extérieurs, et que la barre de réglage 15 a une longueur au moins égale à la distance séparant ces deux plans transversaux.

En effet, le coulissement de la barre de réglage 15 dans le manchon 13 permet de faire varier la distance entre les étriers intérieurs 10, 11 et les étriers extérieurs 16, 17, et donc de toujours positionner les étriers intérieurs 10, 11 et les étriers extérieurs 16, 17 dans les deux plans transversaux en question du wish-bone.

On pourrait, à titre de perfectionnement, monter les étriers extérieurs 16, 17 de façon télescopique l'un par rapport à l'autre et même prévoir que les étriers intérieurs 10, 11 pourraient coulisser légèrement à la surface de la traverse 2, pour faire varier leur écartement, un dispositif simple de blocage de ces étriers étant alors prévu sur cette traverse.

De même, les étriers extérieurs 16, 17 pourraient être fixés sur la traverse 2. Dans ce cas, leurs branches devraient être montées pivotantes, et ils pourraient être disposés respectivement en face des autres étriers intérieurs 10, 11, pour permettre le passage des armatures du wish-bone et leur blocage entre les étriers intérieurs et extérieurs, par formation autour de ces armatures de deux enveloppes circulaires pratiquement fermées. Au lieu des étriers extérieurs, les étriers intérieurs pourraient être montés pivotants. Les quatre étriers pourraient d'ailleurs l'être ensemble.

Il va de soi que l'on pourrait également fixer sur le support des étriers ouverts vers l'extérieur et prévoir des étriers mobiles en translation perpendiculairement aux essieux de roues qui soient ouverts vers l'intérieur, ces étriers ayant de préférence leur branche pivotante.

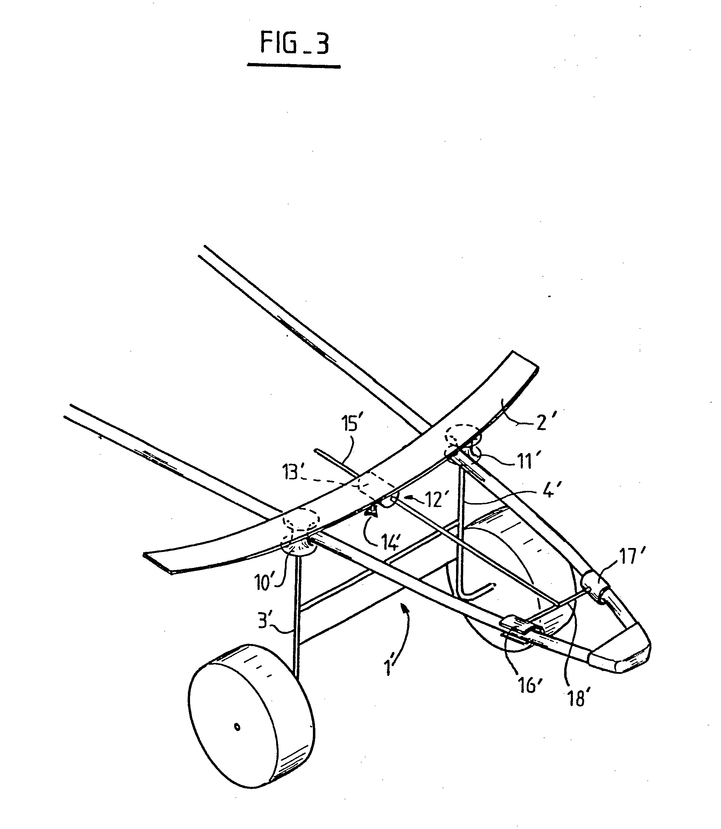

En référence à la figure 3, la forme de réalisation du chariot de l'invention comporte, tout comme la précédente, un support 1', avec une traverse 2', sur laquelle est fixé un organe de réglage 12' avec un manchon 13' et un boulon de blocage 14', une barre de réglage 15' portant une tige 18' portant elle-même deux étriers extérieurs 16', 17'. Tous les éléments 12' à 18' sont identiques à ceux des figures 1 et 2. Le chariot de la figure 3 se ditingue par le fait que les cales d'appui ont disparu, que c'est la traverse 2' elle-même qui constitue un berceau d'appui, ouvert vers le haut, pour la planche, que l'organe de réglage 12' est fixé à la surface inférieure de ce berceau, et que les étriers intérieurs sont remplacés, dans leur fonction, par des éléments à gorge 10', 11', du type poulie ou diabolo, montés fixes ou rotatifs à l'extrémité supérieure des montants 3' et 4' du chariot. S'ils sont fixes, le berceau 2' est fixé sur eux. S'il s'agit de poulies rotatives, les montants 3' et 4' servent d'essieux à ces poulies, qui sont maintenues fixes en translation par des moyens classiques, par exemple du type goupille, le berceau 2' étant fixé aux deux extrémités supérieures des montants du chariot. Cette disposition permet de faire reposer la planche en partie sur une surface d'appui relativement étendue.

0045685

Revendications

1.- Chariot pour déplacer une charge allongée, notamment une planche à voile à laquelle est associée une lunette, dite "wish-bone", à l'aide d'un élément (20) à deux armatures (21, 22) non parallèles, notamment du wish-bone de la planche, caractérisé par le fait qu'il comporte un support (1-1') solidaire d'au moins un essieu (6,7) de roue (5) et, solidaires du support (1-1'), des premiers moyens (10, 11-10',11') agencés pour coopérer respectivement avec les deux surfaces extérieures des deux armatures (21, 22) et des seconds moyens (16, 17-16', 17') agencés pour coopérer respectivement avec les deux surfaces intérieures des deux armatures (21, 22)

2.- Chariot selon la revendication 1, dans lequel les seconds moyens (16, 17-16', 17') sont montés mobiles en translation perpendiculairement à l'essieu de roue (6, 7).

3.- Chariot selon la revendication 2, dans lequel les seconds moyens comprennent des étriers (16, 17-16', 17') ouverts vers l'extérieur.

4.- Chariot selon la revendication 3, dans lequel les étriers (16, 17-16', 17') sont solidaires d'une tige (18-18') parallèle à l'essieu de roue (6, 7), cette tige (18-18') étant solidaire d'une barre (15-15') montée coulissante dans un manchon (13-13') fixé au support (1-1').

5.- Chariot selon la revendication 4, dans lequel le dit manchon (13) est fixé à la surface supérieure du support (1).

6.-Chariot selon la revendication 5, dans lequel les premiers moyens comprennent des étriers (10, 11) ouverts vers l'intérieur.

7.- Chariot selon la revendication 4, dans lequel le dit manchon (13') est fixé à la surface inférieure du support (1').

8.- Chariot selon la revendication 7, dans lequel les premiers moyens comprennent des poulies (10', 11') à gorge disposées sous le support (1').

9.- Chariot selon la revendication 1, dans lequel les premiers moyens (10, 11-10', 11') sont montés mobiles en translation perpendiculairement à l'essieu de roue (6, 7).

10.- Chariot selon la revendication 1, dans lequel les premiers (10, 11-10', 11') et seconds (16, 17-16', 17') moyens sont fixés au support (1-1').

11.- Chariot selon la revendication 10, dans lequel les seconds moyens (16, 17-16', 17') comprennent des étriers à branche pivotante.

12.- Chariot selon l'une des revendications 3 à 8, dans lequel les étriers (16, 17-16', 17') ouverts vers l'extérieur sont mobiles en translation parallèlement à l'essieu de roue (6, 7).

13.- Chariot selon l'une des revendications 6 à 8, dans lequel les étriers ouverts vers l'intérieur (10, 11) sont mobiles en translation parallèlement à l'essieu de roue (6,7).

FIG _ 1

FIG _ 2

0045685

# FIG_3

## Office européen des brevets

## RAPPORT DE RECHERCHE EUROPEENNE

EP 81 40 1194

| Catégorie | Citation du document avec indication, en cas de besoin, des parties pertinentes | Revendication concernée |
|---|---|---|
| A | FR - A - 2 414 432 (VERNIER) <br> * En entier * <br> -- | 1 |
| A | DE - A - 2 640 236 (MOHREN) <br> * En entier * <br> -- | 1 |
| A | DE - A - 2 633 149 (FRIEDEL) <br> * En entier * <br> -- | 1 |
| A | DE - U - 7 927 128 (LINDNER) <br> * Extrait en entier * <br> -- | 1 |
| A | DE - U - 7 917 109 (PODZUWEIT) <br> * Extrait en entier * <br> -- | 1 |
| A | DE - A - 2 850 753 (HILL) <br> * En entier * <br> -- | 1 |
| A | DE - U - 7 920 892 (PFEIFFER) <br> * Extrait en entier * <br> -- | 1 |
| A | DE - U - 7 932 762 (BAISCH) <br> * Extrait en entier * <br> -- | 1 |

./.

**DOCUMENTS CONSIDERES COMME PERTINENTS**

**CLASSEMENT DE LA DEMANDE (Int. Cl.³)**

B 60 P 3/10
B 63 C 13/00
B 63 B 35/72
B 62 B 1/26

**DOMAINES TECHNIQUES RECHERCHES (Int. Cl.³)**

B 60 P
B 62 B
B 63 B
B 63 C

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 29-10-1981 | ZERI |

OEB Form 1503.1 06.78

Office européen
des brevets

**RAPPORT DE RECHERCHE EUROPEENNE**

| Catégorie | Citation du document avec indication, en cas de besoin, des parties pertinentes | Revendica-tion concernée |
|---|---|---|
| A | DE - U - 7 712 921 (MULLER) <br> * Extrait en entier * <br> -- | 1 |
| A | DE - U - 7 834 825 (PFEIFFER) <br> * Extrait en entier * <br> -- | 1 |
| A | US - A - 4 049 283 (BROOKES) <br> * En entier * <br> ---- | 1 |

**DOCUMENTS CONSIDERES COMME PERTINENTS**

CLASSEMENT DE LA DEMANDE (Int. Cl. 3)

DOMAINES TECHNIQUES RECHERCHES (Int. Cl. 3)

OEB Form 1503.2   06.78